# EUROPEAN PATENT APPLICATION

(11) **EP 2 230 496 A1**
(43) Date of publication of application: **22.09.2010**
(21) Application number: 09003738.3
(22) Date of filing: 16.03.2009
(51) Int. Cl.: G01J 5/00, G06K 9/00

(54) **Method and system for automatically detecting objects in front of a motor vehicle**

(71) Applicant: Autoliv Development AB, 447 83 Vårgårda (SE)
(72) Inventor: Hanqvist, Mattias, 58212 Linköping (SE); Tjärnström, Frederik, 58245 Linköping (SE)
(74) Representative: Müller Verweyen

(57) **Abstract**

A method for automatically detecting objects in front of a motor vehicle comprises the steps of detecting images of a region in front of the motor vehicle by vehicle mounted imaging means (11), applying in an electronic processing means (15) a software for image processing of the detected images and identifying objects in front of the motor vehicle on the basis of said image processing, and for controlling safety means (16, 17, --) depending on the result of said object identifying. The method comprises calculating an estimated absolute temperature of at least part of said detected images on the basis of temperature information contained in said detected images, and using said estimated absolute temperature in said image processing and control software.

## Description

The invention relates to a method for automatically detecting objects in front of a motor vehicle, comprising the steps of detecting images of a region in front of the motor vehicle by vehicle mounted imaging means, applying in an electronic processing means a software for image processing of the detected images and identifying objects in front of the motor vehicle on the basis of said image processing, and for controlling safety means depending on the result of said object identifying.

It is known from WO 2008 057042 Al to identify non-relevant hot or warm objects in the detected image based on temperature differences relating to the object under consideration, for example temperature differences between an object and its surrounding, or between different regions of the object. However, this method may not work well under different conditions of the surrounding environment. For example it may happen that objects that have been warmed up in the sun during daytime, such as mountain sides or buildings, are wrongly identified as pedestrians. It can also happen that rain, or a dirty or abraded protective camera window causes image quality deteriorations so that objects present in front of the vehicle can not be reliably detected.

It is the object of the present invention to provide a method for automatically detecting objects in front of a motor vehicle with high reliability under different conditions of the surrounding environment.

The invention solves this object with the features of the independent claims. By calculating and using an estimated absolute temperature of at least part of the detected images, additional information is available which can be used effectively in the object detection process in order to improve the detection reliability. Absolute temperature estimations provide a significant enhanced reliability over relative temperatures which are subject to errors in particular due to the influence of the reference temperature, for example if the temperature of the road, the background scene or the sky referred to significantly deviates from the temperature of the car environment measured by an independent vehicle-mounted temperature sensor.

The invention is based on the finding that it is possible to calculate absolute temperatures with a sufficiently high accuracy, without having to use specially designed and very expensive cameras having capabilities of determining and outputting accurate absolute temperature values. From such art the invention may be delimited in that the generation of estimated absolute temperature values is preferably performed not in the imaging means but in the electronic processing means, or in an electronic control unit comprising an electronic processing means, on the basis of the data provided by the imaging means.

In a preferred application of the invention an estimated absolute temperature of parts of the detected scene is calculated and used to analyze the detected scene. The information obtained by this scene analysis may be suitably used to tune or adjust an algorithm in the image processing and control software. For example, the absolute temperature of the road surface in front of the vehicle can be estimated and compared to the ambient temperature measured by an independent vehicle-mounted temperature sensor. If the estimated road temperature is warmer than the ambient temperature, indicating for example solar loading, the risk for false alarms is higher and the algorithms can be tuned accordingly. In case of a low contrast scene, for example due to rain, a wet scene, or an abraded or dirty protective camera window, the temperature in the scene may be relatively homogeneous and the algorithm parameters could be tuned to be more sensitive in order not to risk missing detection of any objects present in front of the vehicle. If for example the absolute temperature of the sky is low, there may be clouds or a tunnel, which may be taken into account in the image processing and control software.

In another preferred application of the invention an estimated absolute temperature of object candidates is calculated which can then be used in an object candidate verification step. For example an object candidate may be verified as a true object present in front of the vehicle only if it fulfils an expected absolute temperature characteristics. If the absolute temperature characteristics differs from an expected object temperature characteristics the object candidate can be discarded in order to avoid generating a false warning.

It may be useful to perform an analysis of the spatial distribution of the calculated absolute temperature. For example a pedestrian candidate object may be divided into three parts for the head, the upper body and the lower body, where the estimated absolute temperature is proved to fall into a predetermined individual temperature range for all three parts and the candidate object is confirmed or discarded as a pedestrian based on the result of this comparison. This would lead to an improved reliability of pedestrian identification, because the head is usually warmer than the upper body and this in turn warmer than the lower body. For example an opposite distribution with warmer bottom than top, although having the same overall average absolute temperature, would be very unlikely a pedestrian. Another possibility is to analyze the too hot and/or too cold spots of an object candidate and decide whether they are reasonable to be part of the object, for example a pedestrian, or not. For example, if a very small percentage of the pixels in the upper part of an object candidate is very hot, the object could a pedestrian holding a cigarette. On the other hand, if a larger percentage of the pixels in a lower part of the object candidate is very hot, it is likely that this is caused by an exhaust pipe of a car.

The estimated absolute temperature may also be analyzed regarding changes over time. This information may be used for example to detect water or dirt on a protective window of the imaging means, or abrasion of such protective window. This may be based on the assumption that the estimated absolute temperature averaged over at least part of the image, and/or over time, should be close to the ambient temperature measured by an independent vehicle mounted temperature sensor. Therefore, if this ratio falls significantly below one, and/or decreases over a significantly long period of time, it indicates a reduced transmittance through the protective window due to the above mentioned influences.

Such a finding could be used in different ways. For example a corresponding compensation could be introduced into the calculation of the estimated absolute temperature. It is also possible to indicate a reduced window transmittance to the driver causing him to clean the protective window, and/or automatic cleaning of the protective window may be activated. Of course, other information can be used to determine a reduced transmittance of the protective window, for example signals from a rain sensor and/or windscreen wiper, and the like.

In general, the estimated absolute temperate can be calculated on the basis of values measured in real time, values determined in advance in a measurement procedure, values based on theoretical considerations, known parameters, and/or other suited quantities.

A factor which significantly influences the estimated absolute temperate is the sensor temperature of an imaging sensor in the imaging means. Therefore, the sensor temperature is preferably measured in real time using a temperature sensor suitably coupled to the imaging sensor, in order to obtain a most reliable value of this quantity.

Other factors which significantly influence the estimated absolute temperate are the emissivity of the object which can be assumed to be close to one for humans, and/or the responsivity of each pixel of the image sensor, i.e. how many counts a one degree temperature change corresponds to, which can for example be determined in advance in a measurement procedure.

In the following the invention shall be illustrated on the basis of preferred embodiments with reference to the accompanying drawings, wherein:

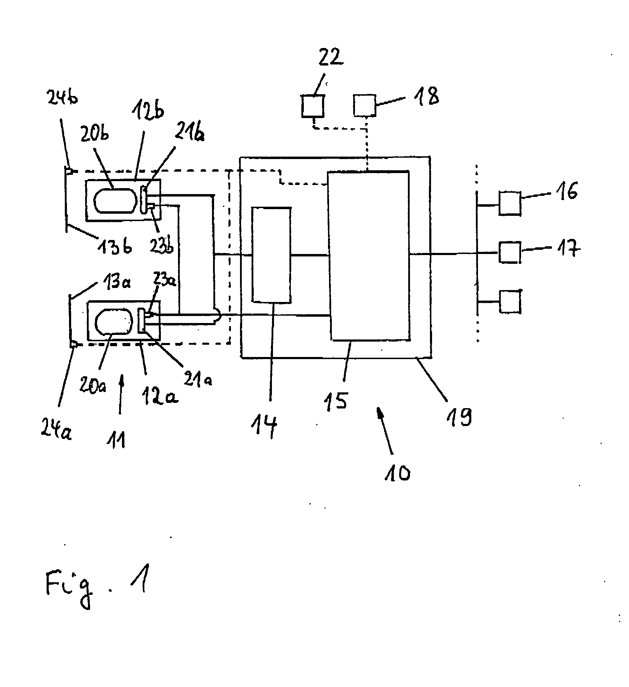

Fig. 1 shows a safety system for a motor vehicle.

The safety system 10 is mounted in a motor vehicle and comprises an imaging means 11 for detecting images of a region in front of the motor vehicle. The imaging means 11 preferably comprises one or more infrared cameras 12a, 12b, where infrared in particular means far infrared with wavelengths larger than 5 micrometer, more specifically in the wavelength range between 5 and 20 micrometer which is particularly suited to determine absolute temperatures in a terrestrial environment. In the preferred embodiment shown in Fig. 1 the imaging means 11 comprises stereo cameras 12a, 12b; alternatively a mono camera can be used. Preferably at least one protective window 13a, 13b is provided for protecting the optics 20a, 20b of the imaging means 11, here a protective window 13a, 13b for each camera 12a, 12b. In general, a protective window 13a, 13b may be part of the camera 12a, 12b, or a separate protective window, or a combination thereof. A separate protective window 13a, 13b could for example be formed by a headlight window if the camera 12a, 12b can be arranged in a vehicle headlight. An arrangement comprising more than one protective window for each camera is also possible. Furthermore, a protective window for the imaging means 11 is not strictly necessary.

Each camera 12a, 12b comprises an optics arrangement 20a, 20b and a two-dimensional infrared sensor 21a, 21b provided to convert incident infrared radiation covering the thermal wavelength region transmitted through the camera 12a, 12b into an electrical signal for each image pixel, where the electrical signal contains information about the relative temperature of the thermal radiation emitted by the corresponding point in the scene.

The cameras 12a, 12b are coupled to an image pre-processor 14 which may be realized by a dedicated hardware circuit, and is adapted to calibrate the cameras 12a, 12b, control the capture and digitizing of the images, warp them into alignment, merge left/right images into single images, and perform pyramid wavelet decomposition to create multi-resolution disparity images, which per se is known in the art.

The pre-processed image data is then provided to an electronic processing means 15 where further data processing is carried out by means of a corresponding image processing and control software. The further data processing comprises image processing in order to extract and classify possible objects in front of the motor vehicle, such as pedestrians, bicyclists or large animals, tracking the position of object candidates in the image, as well as activating or controlling safety means 16, 17, - depending on the image processing. For example if the processing means 15 determines that there is a non-negligible risk of a collision with a detected object, a warning means 16 adapted to warn the driver is preferably activated. The warning means 16 suitably provides optical, acoustical and/or haptical warning signals. Further safety means not shown in Fig. 1 may be activated or suitably controlled, for example restraint systems such as occupant airbags or safety belt tensioners; pedestrian airbags, hood lifters and the like; or dynamic vehicle control systems such as brakes. On the other hand, if the processing means 15 determines that the risk of collision with a detected object is negligible, for example in case of a pedestrian at the safe roadside, the processing means 15 may control a display means 17 to display information indicating the object.

The electronic processing means 15 is preferably programmed or programmable and may comprise a microprocessor or microcontroller. The image pre-processor 14 and the electronic processing means 15 are preferably realised in an on-board electronic control unit (ECU) 19 and may be connected to the cameras 12a, 12b, the safety means 16, 17, - and an environment temperature sensor 18 via an on-board data bus. All steps from imaging, image pre-processing, image processing, to activation or control of safety means 16, 17 are performed continuously during driving in real time.

An estimated absolute temperature of at least part of the infrared image detected by the cameras 12a, 12b and pre-processed by the pre-processor 14 is calculated on the basis of the relative temperature information contained in the infrared image preferably in the processing means 15. However, calculating estimated absolute temperatures by processing means arranged in the camera 12a, 12b is also possible.

In principle the absolute temperature of any object in the scene cannot be determined exactly because it depends on the emissivity of any object in the inspected scene deviating from one, which practically cannot be determined in real time. For this reason, the term "estimated absolute temperature" is used in this application. However, usually reasonable assumptions can be made about the emissivity of objects to be detected; for example, the emissivity of the human skin can be assumed to take a predetermined value close to one.

In the following, other factors which may influence the absolute temperature calculations are discussed.

The temperature of the imaging sensor 21a, 21b is one of the major contributing factors. Therefore, preferably at least one temperature sensor 23a, 23b is coupled to at least one of the imaging sensors 21a, 21b in order to measure the temperature of the imaging sensors 21a, 21b in real time and provide a corresponding temperature signal to the processing means 15.

In the embodiment of Fig. 1 a temperature sensor 23a, 23b is provided for each imaging sensor 21a, 21b but in principle one temperature sensor coupled to one of the imaging sensors 21a, 21b is sufficient.

Another major contributing factor is the responsivity of the image sensor 21a, 21b, i.e. how many counts a one degree temperature difference corresponds to for every pixel. This quantity can be pre-determined by the camera supplier in a measurement procedure.

The temperature of the protective window 13a, 13b can be measured by means of at least one temperature sensor 24a, 24b coupled to at least one protective window 13a, 13b. However, the temperature sensor 24a, 24b is more optional which is indicated by dotted signal lines in Fig. 1. As an alternative, for example the temperature provided by the temperature sensor 18 measuring the temperature of the vehicle environment, or a value based thereon, could be used as an approximation for the temperature of the protective window 13a, 13b.

The emissivity, the transmittance of the protective window 13a, 13b and/or the transmittance of the optics arrangement 20a, 20b, if deviating from one, can be pre-determined by the camera supplier in a measurement procedure. The transmittance of the protective window 13a, 13b deviates from one because of radiation damping or scattering effects.

Another influencing factor is a reduced transmittance of the radiation on its path between the object and the protective window 13a, 13b. This may be caused by radiation damping or scattering effects in the atmosphere, absorption by water in the air, for example rain or fog, and/or absorption by water or dirt on the protective window 13a, 13b.

In a preferred embodiment an estimated absolute temperature of parts of the detected scene is calculated and used to analyze the detected scene. The information obtained by this scene analysis may be suitably used to tune or adjust an algorithm in the image processing and control software applied in the electronic processing means 15. For example, the absolute temperature of the road surface in front of the vehicle can be estimated and compared to the ambient temperature measured by the temperature sensor 18. If the estimated road temperature is warmer than the ambient temperature, indicating for example solar loading, the risk for false alarms is higher and the algorithms can be tuned accordingly. In case of a low contrast scene, for example due to rain, a wet scene, or an abraded or dirty protective camera window, the temperature in the scene may be relatively homogeneous and the parameters in the image and control software could be tuned to be more sensitive in order not to risk missing detection of any objects present in front of the vehicle.

In another preferred application of the invention an estimated absolute temperature of object candidates is calculated which can then be used in an object candidate verification step in the image processing and control software applied in the electronic processing means 15. For example an object candidate may be verified as a true object present in front of the vehicle only if the average estimated absolute temperature falls into a temperature range to be expected for that kind of object, or more generally, if the estimated absolute temperature matches temperature characteristics to be expected for that kind of object. If the estimated absolute temperature differs from an expected object temperature characteristics, the object candidate can be discarded in order to avoid generating a false warning. For example tree tops can be discarded since they are often surrounded by a cold sky, and the back of a vehicle can be discarded because of the warm exhaust pipe.

The analysis of the spatial distribution of the calculated absolute temperature and/or distribution of the calculated absolute temperature over time described above is also performed in the electronic processing means 15.

## Claims

1. A method for automatically detecting objects in front of a motor vehicle, comprising the steps of: detecting images of a region in front of the motor vehicle by vehicle mounted imaging means (11), applying in an electronic processing means (15) a software for image processing of the detected images and identifying objects in front of the motor vehicle on the basis of said image processing, and for controlling safety means (16, 17, ...) depending on the result of said object identifying, **characterized by** calculating an estimated absolute temperature of at least part of said detected images on the basis of temperature information contained in said detected images, and using said estimated absolute temperature in said image processing and control software.

2. The method according to claim 1, wherein the calculation of estimated absolute temperature is performed in said electronic processing means (15).

3. The method according to claim 1 or 2, wherein an estimated absolute temperature of parts of the detected scene is calculated and used to analyze the detected scene.

4. The method according to claim 3, comprising adjusting, depending on the analysis of the detected scene, a detection sensivity threshold in said image processing and control software.

5. The method according to any one of the preceding claims, comprising calculating an estimated absolute temperature of object candidates.

6. The method according to claim 5, comprising using said estimated absolute temperature in an object candidate verifying/discarding step.

7. The method according to any one of the preceding claims, comprising using a sensor temperature of an imaging sensor (21a, 21b) in said imaging means (11) in calculating said estimated absolute temperature.

8. The method according to claim 7, comprising measuring said sensor temperature by means of a temperature sensor (23a, 23b) suitably coupled to said imaging sensor (21a, 21b).

9. The method according to any one of the preceding claims, comprising using a predetermined responsivity of an imaging sensor (21, 21b) in said imaging means (11) in calculating said estimated absolute temperature.

10. The method according to any one of the preceding claims, comprising using an estimated emissivity of an object in the imaged scene in calculating said estimated absolute temperature.

11. The method according to any one of the preceding claims, comprising using a window temperature of a protective window (13a, 13b) for said imaging means (11) in calculating said estimated absolute temperature.

12. The method according to claim 11, comprising measuring said window temperature by means of a temperature sensor (24a, 24b) suitably coupled to said protective window (13a, 13b).

13. The method according to any one of the preceding claims, comprising analysing changes of the estimated absolute temperature over time.

14. A safety system for a motor vehicle, comprising imaging means (11) adapted to detect images of a region in front of the motor vehicle, electronic processing means (15) adapted to process images detected by said imaging means (11) in order to identify objects in front of the motor vehicle, and safety means (16, 17, ...) controlled by said electronic processing means (15) depending on the result of said image processing, **characterized in that** said electronic processing means (15) is adapted to calculate an estimated absolute temperature of an identified object.

15. The system according to claim 14, wherein said imaging means comprises at least one image sensor (21a, 21b) and a temperature sensor (23a, 23b) coupled to said image sensor.
